# EUROPÄISCHE PATENTSCHRIFT

(11) **EP 2 805 146 B1**
(45) Veröffentlichungstag und Bekanntmachung des Hinweises auf die Patenterteilung: **14.06.2017**
(21) Anmeldenummer: 12723527.3
(22) Anmeldetag: 04.04.2012
(51) Int. Cl.: G01N 17/04

(54) **ANORDNUNG MIT INTEGRIERTEM MONITORINGELEMENT**
ARRANGEMENT WITH INTEGRATED MONITORING ELEMENT
AGENCEMENT AVEC ÉLÉMENT DE SURVEILLANCE INTÉGRÉ

(30) Priorität: 20.01.2012 CH 91122012
(43) Veröffentlichungstag der Anmeldung: 26.11.2014
(73) Patentinhaber: BASYS Ag, 3422 Neuhof (CH)
(72) Erfinder: ROBERT, André, CH-9445 Rebstein (CH); GUTZWILLER, Clément, CH-3442 Kirchberg (CH)
(74) Vertreter: Fleck, Hermann-Josef
(86) Internationale Anmeldenummer: PCT/IB2012/051663
(87) Internationale Veröffentlichungsnummer: WO 2013/108084

(56) Entgegenhaltungen:
- EP-A1- 0 822 299
- EP-A2- 0 919 672
- WO-A1-2005/111575
- DE-A1- 3 531 479
- DE-A1- 19 818 370
- DE-C1- 19 706 510
- DE-U1-202006 018 747
- US-A- 5 015 355

## Beschreibung

Die vorliegende Erfindung betrifft eine Anordnung zum Einsatz in einem Gebäude, mit mindestens zwei Bauteilen, einem integrierten Monitoringelement und einem Verbindungselement zur Verbindung der zwei Bauteile. Messvorrichtungen zur Überwachung des Einflusses verschiedener Stoffe auf die Korrosion einer Stahlarmierung sind z.B. aus DE 102006030519A1, EP2172765A1 oder WO2005111575A1 bekannt. Alle diese Systeme weisen im Beton nahe der Bewehrung eingebaute Sensoren auf, welche physikalische oder chemische Änderungen der Bewehrung erfassen und über elektrische oder elektronische Signale an eine außerhalb der Konstruktion befindliche Auswerteeinrichtung abgeben. Sie stellen bezüglich Kosten und für den Unterhalt oft aufwendige Lösungen dar und sind vor allem für Bauteile geeignet, welche nach dem Einbau ständig und unmittelbar überwacht werden müssen. Typische Beispiele eines solchen Bedarfes sind die Überwachung der Bewehrung von Brücken.

Die Nutzung von Gebäuden ist in der Regel über viele Jahrzehnte Tatsache. Für Gebäudeteile die der Witterung entzogen sind stellen sich Dauerhaftigkeitsfragen kaum. Dagegen gibt es Bauteile und Verbindungen, beispielsweise im Bereich der Gebäudehülle, deren Zustand nach einigen Jahren oder Jahrzehnten mit einfachen Mitteln abschätzbar sein sollte. Typische Beispiele dieser Art sind Kragplatten für Balkone (siehe z.B. EP 0 822 299), welche bekannterweise bei älteren Gebäuden hin und wieder einbrechen. Ebenso müsste sich eine solche Vorrichtung für Dorne eignen, die der Deckenbefestigung dienen und sich in nicht geschlossenen Räumen befinden, wie z.B. in EP 0 919 672. Da es sich um Bauteile handelt, welche die vorgesehene Nutzungsdauer unbeschadet überstehen müssen, stellt sich die Frage der Alterung der Bewehrung erst nach einigen Jahren. Wenn Verbindungsstäbe korrodieren, ist deren Festigkeit stark eingeschränkt und es kann vor Ende der vorgesehenen Nutzungsdauer zum Versagen der Befestigungselemente und damit zum Einsturz der damit befestigten Bauteile kommen. Beispiele solcher Einstürze sind leider bekannt.

Für kritische Bauteile hohen Alters werden oft Expertisen eines Baufachmanns eingeholt. Obwohl sich Wissen und Technik zur Beurteilung solcher Objekte stark verbessert haben, mangelt es doch oft am wirklichen "Einblick" in das Objekt. Mögliche Korrosionsschäden können in vielen Fällen von außen schlecht beurteilt werden. Man stützt sich auf

Mutmassungen und tendiert aus Gründen der Haftung zu konservativen Aussagen, was der Wirtschaftlichkeit meist zuwider läuft. Kritisch ist die Situation, wenn Bauteile und Verbindungselemente Teil eines statischen Systems sind, welches bei Versagen einzelner Teile kollabieren kann.

Investoren gehen von einem vernünftigen, optimierten Gebäudelebenszyklus aus um die investierten Mittel abzuschreiben. Sie halten sich an die Forderung, dass die Objekte als Ganzes bis zum Ablauf der geplanten Lebensdauer zuverlässig und sicher genutzt werden können. Nun gibt es aber auch Gründe, weshalb man das Ojbekt länger nutzen möchte, weil z.B. die Bausubstanz den Anforderungen noch durchaus entspricht, oder wenn die Architektur speziell ist, oder wenn man das Objekt ganz einfach bewahren möchte.

Die vorliegende Erfindung stellt sich nunmehr die Aufgabe eine Messvorrichtung vorzustellen, welche kostengünstig einzubauen ist und bei Bedarf zu einem beliebigen Zeitpunkt, auch noch nach Jahren leicht entnommen und im Labor geprüft werden kann, ohne die statische Festigkeit des Objektes zu beeinflussen.

Diese Aufgabe löst eine Anordnung mit den Merkmalen des Patentanspruches 1. Weitere erfindungsgemässe Merkmale gehen aus den abhängigen Ansprüchen hervor und deren Vorteile sind in der nachfolgenden Beschreibung erläutert.

In der Zeichnung zeigt:
- Fig 1: Anordnung von Proben in einer Kragplattenanschlussbewehrung.
- Fig 2: Anordnung von Proben in einer Kragplattenanschlussbewehrung.
- Fig 3: Probe zu einem Kragplattenanschluss im Schnitt.
- Fig 4: Probe zu einem Dorn im Schnitt.
- Fig 5: Ansicht einer Probe im Verbindungelement.
- Fig 6: Schnitt eines Verbindungselementes

Die Figuren stellen mögliche Ausführungsbeispiele dar, welche in der nachfolgenden Beschreibung erläutert werden.

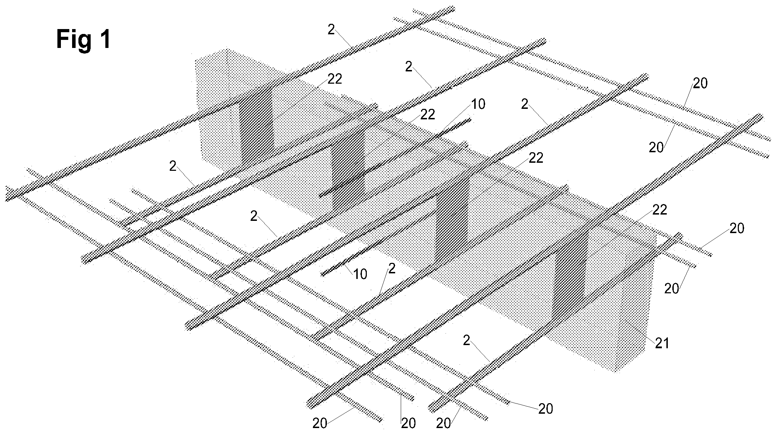

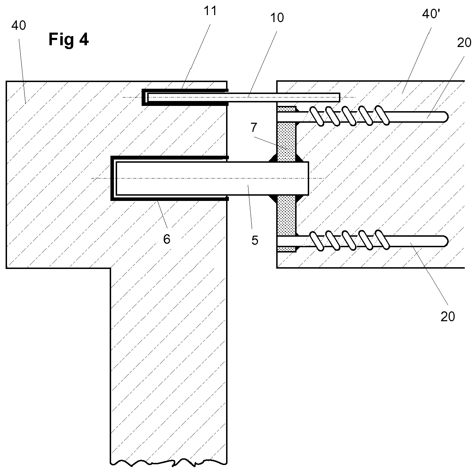

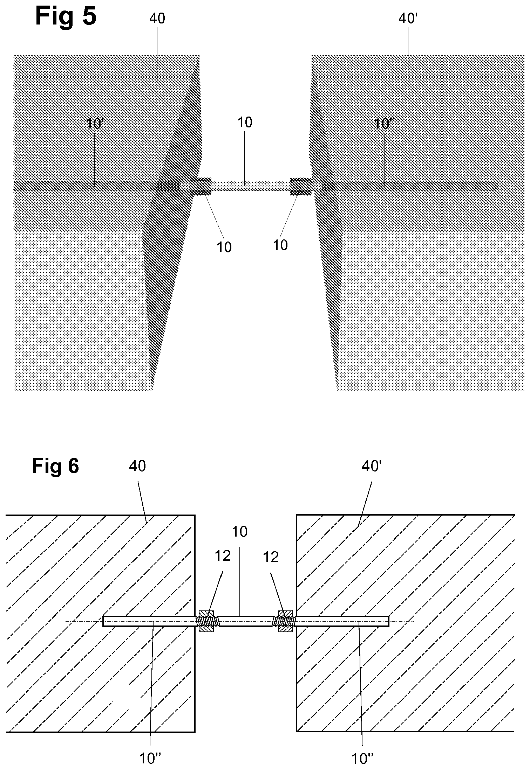

Unter "Verbindungselement" versteht man eine Konstruktion, mit der zwei Betonteile 40, 40' miteinander verbunden sind. Dies kann ein Kragplattenanschluss (Fig 1 bis Fig 3), eine Dornverbindung (Fig 4 und Fig 6) oder jede andere zwei Betonteile 40,40' verbindende Bewehrung sein.

Ein Monitoringelement der erfinderischen Art hat keine tragende Funktion. Es ist allerdings denselben Verformungen und Einflüssen ausgesetzt, wie Verbindungsstäbe 2 (Fig 1) oder Dorne 5 (Fig 4). Es kann aber auch anstatt in gleicher Position wie diese Elemente ganz einfach in einer dem Kraftfluss eines Verbindungselementes entsprechender Richtung eingebaut werden, wobei es dann den vorgesehenen Verformung und Einflüssen ausgesetzt ist.

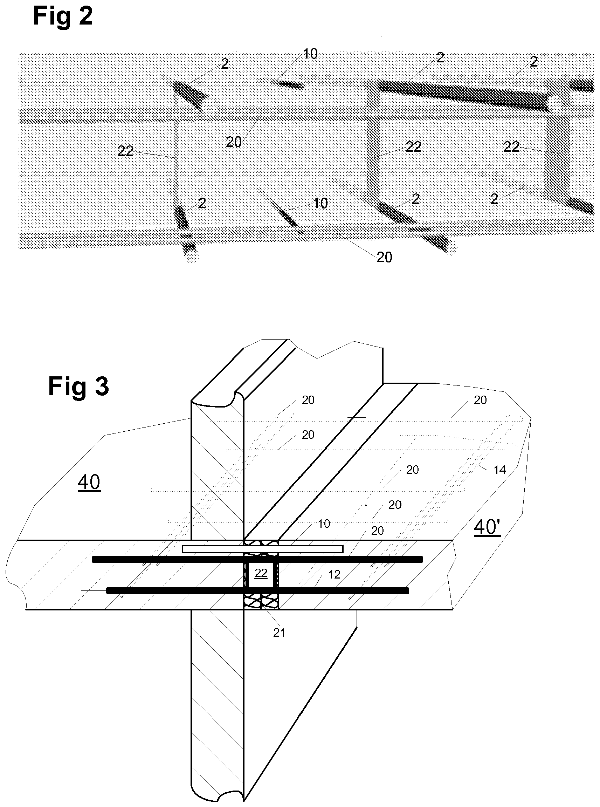

Ein Monitoringelement besteht aus Stabartigen Proben 10, welche z.B. in einer Kragplattenanschlussbewehrung zwischen zwei Verbindungsstäben 2 der Bewehrung 20 und parallel zu denselben in etwa der gleichen horizontalen Lage eingebaut (Fig1, Fig2) sind. Sie sind in der Regel ungleich der Darstellung in den Schnittzeichungen (Fig 3,4 und 6) in ihrer horizontalen Ausrichtung zu den Verbindungselementen versetzt angeordnet, aber grundsätzlich denselben klimatischen und statischen Einflüssen ausgesetzt, wie die zu überwachenden Teile der Bewehrung 20. Bei Bedarf, auch nach mehreren Jahren können Sie jedoch jederzeit ohne Einfluss auf die Stabilität der Konstruktion entfernt werden. Dies birgt den Vorteil, dass sie nach der Entnahme einer Prüfung im Labor unterzogen werden können, welche sehr viel präzisere Details aufzeigt, als eine Grobanalyse ohne Einblick in die Konstruktion vor Ort.

Um aus den geprüften Proben 10 auf die vorhandene Bewehrung Rückschlüsse ziehen zu können, müssen die Proben ganz bestimmte Dimensionen aufweisen. Insbesondere die Querschnittsfläche der Proben 10 an den kritischen Stellen sollte keine grössere Querschnittsfläche als die Verbindungsstäbe 2 aufweisen. In der Regel werden für die Beurteilung der Korrosion im Bereich der Isolation 21 und im Bereich der Betonteile 40, 40' dieselben Bedingungen eingehalten werden. Es kann jedoch sein, dass für bestimmte Dorne oder Kragplatten gezielt von den Verbindungsstäben 2 unterschiedliche Querschnittsflächen für die Proben 10 gewählt werden.

Eine Probe 10 wird horizontal, evtl. auch vertikal versetzt zu den Verbindungsstäben 2 (Fig 1 und Fig 2) durch gleichzeitigen Einbau mit den Verbindungsstäben 2 oder einem Dorn 5 (Fig 4 und Fig 6) mit mindestens einem Bauteil 40,40' kraftschlüssig eingebaut und verbunden. Eine Probe 10 kann zu den Verbindungsstäben 2 parallel angeordnet sein. In manchen Fällen empfiehlt es sich Proben 10 in einer dem Kräftefluss des Verbindungselementes entsprechenden Richtung anzuordnen. Um ganz spezielle Daten zu beobachten können Proben 10 auch zur Horizontalen, zur Vertikalen oder zu beiden Ebenen in einem Winkel von 5° bis 85° Grad angeordnet werden.

Eine Probe 10 ist in der Regel in den Betonteilen 40,40' fest einbetoniert. Sie wird jedoch wie genau so eingebaut, wie das Verbindungselement. In einem Kragplattenanschlusselement (Fig 3) wird die Probe 10, wie der zu beobachtende Verbindungsstab 2, in beiden Betonteilen 40, 40' fest und kraftschlüssig verankert. In einer Dornverbindung (Fig 4) wird die Probe 10, genauso wie der Dorn 5 in seiner Hülse 6 beweglich angeordnet ist, in einer Hülse 11 beweglich angeordnet.

Um die Probe leichter entfernen und z.B. ins Labor bringen zu können, kann diese z.B. in einem Betonteil 40,40' kraftschlüssig eingemauert sein, wobei ein kurzer mit Gewinde versehener Stummel aus dem Beton herausragt. Über diesen Gewindestummel wird eine Mutter 12 gestülpt, wobei diese Mutter 12 über den Gewindestummel hinausragt. In dieses hinausragende Gewinde der Mutter 12 wird dann die Probe 10, welche für diesen Fall natürlich mit am Ende dem gleichen Gewinde wie der Gewindestummel versehen ist, in die Mutter 12 eingedreht. Wenn die Probe 10 am einen Ende mit einem rechtsgängigen und am andern mit einem linksgängigen Gewinde versehen ist (Fig 5 und 6), welche mindestens die Länge der entsprechenden Mutter 12, 12' aufweisen, kann z.B. bei einem Kragplattensanschluss im Bereich der Isolation 21 der mittlere Teil 10 der Probe (Fig 6) herausgeschraubt werden. Weist die Probe 10 keine solchen Gewinde auf, kann sie im Bereich der Isolation 21 herausgesägt werden. In jedem Fall wird der Ort an dem die Probe 10 eingesetzt ist, gekennzeichnet. Dies ermöglicht auch nach Jahren das Herausnehmen derselben, auch wenn dazu die Betonteile 40, 40' lokal beschädigt werden müssen. Weil gemäss Definition und Auslegung eine Probe 10 keine statische Funktion übernimmt, wird dadurch die Festigkeit der Konstruktion trotzdem nicht beeinflusst.

Je nach Bewehrung und der vorgesehenen gewünschten Kontrolle kann es erforderlich sein, die Proben 10 speziell auszurüsten. Sie können mit Beschichtungen, Einkerbungen, Schweisspunkten etc. versehen werden. Ebenso kann eine Probe aus verschiedenen Materialien zusammengesetzt sein.

Mit Beschichtungen wird man die Probe 10 versehen, damit man feststellen kann, wie sich die Korrosion auswirkt. Zu diesem Zweck wird evtl. nicht die ganze Probe sondern nur ein gewisser Teil derselben mit einer Beschichtung versehen. Damit kann auch geprüft werden, was sich allenfalls unter einer beschädigten Beschichtung der Bewehrung an Korrosion ereignet hat.

Einkerbungen werden angebracht um zu beurteilen was im Bereich von Spalten und Rissen geschieht, da manche Korrosionsarten bevorzugt an diesen Stellen entstehen.

An solchermassen eingebaute Monitoringelemente können auch Dehnmessstreifen mit elektronischer Überwachung oder elektrische Anschlüsse zur elektrischen Überwachung angebracht werden, ohne jedoch aufgrund ihrer Lage (ausserhalb des Betons) die eingangs erwähnten Patente zu verletzen.

## Patentansprüche

1. Anordnung zum Einsatz in einem Gebäude, mit mindestens zwei Bauteilen (40, 40'), einem Monitoringelement und einem Verbindungselement zur Verbindung der zwei Bauteile (40, 40'), wobei das Verbindungselement mindestens einen Verbindungsstab (2) oder Dorn (5) aufweist und das Monitoringelement in der Weise ohne Bewehrungsfunktion in der Verbindung integriert ist, dass es jederzeit ohne Einfluss auf die Stabilität der Konstruktion entfernt werden kann, und aus mindestens einer stabartigen Probe (10) besteht, und wobei die mindestens eine Probe (10) mit mindestens einem der Bauteile (40, 40') kraftschlüssig verbunden ist und mit dem zweiten der Bauteile (40,40') ebenfalls verbunden ist.

2. Anordnung gemäss Anspruch 1 ,
**dadurch gekennzeichnet,**
**dass** die Probe (10) zu mindestens einem Verbindungsstab (2) parallel angeordnet ist.

3. Anordnung gemäss Anspruch 1 ,
**dadurch gekennzeichnet,**
**dass** die Probe (10) in einem Winkel von 5° - 85° Grad zur Vertikalen angeordnet ist.

4. Anordnung gemäss Anspruch 1 ,
**dadurch gekennzeichnet,**
**dass** die Probe (10) in einem Winkel von 5° - 85° Grad zur Horizontalen angeordnet ist.

5. Anordnung nach Anspruch 1 ,
**dadurch gekennzeichnet,**
**dass** die Probe (10) entlang dem Kräftefluss des Verbindungselements in der Weise angeordnet ist, dass sie einer vorgesehenen Verformung ausgesetzt ist.

## Claims

1. Arrangement for use in a building with at least two components (40, 40'), a monitoring element and a connecting element for connecting the two components (40, 40'), wherein the connecting element features at least one connecting bar (2) or spur (5), and the monitoring element is integrated in the connection without reinforcement function in such manner that it can be removed at any time without influence on the stability of the construction and consists of at least one bar-shaped probe (10), and wherein the at least one probe (10) is firmly locked to at least one of the components (40, 40') and also connected to the other component (40, 40').

2. Arrangement according to claim 1,
wherein
the probe (10) is arranged parallel to at least one connecting bar (2).

3. Arrangement according to claim 1,
wherein
the probe (10) is arranged with an angle between 5° and 85° degrees with respect to the vertical direction.

4. Arrangement according to claim 1,
wherein
the probe (10) is arranged with an angle between 5° and 85° degrees with respect to the horizontal direction.

5. Arrangement according to claim 1,
wherein
the probe (10) is arranged along the flow of forces of the connecting element in such manner that it is subjected to an intended deformation.

## Revendications

1. Agencement destiné à être utilisé dans un bâtiment avec au moins deux composants (40, 40'), un élément de surveillance et un élément de liaison pour la liaison des deux composants (40, 40'), dans lequel l'élément de liaison comporte au moins une tige de liaison (2) ou un éperon (5) et l'élément de surveillance est intégré dans la liaison sans fonction de renforcement de telle sorte qu'il puisse être retiré à tout moment sans influence sur la stabilité de la construction et est composé d'au moins une sonde (10) longiligne, et dans lequel la ou les sondes (10) sont fermement reliées à au moins un des composants (40, 40') et également reliées au deuxième composant (40, 40').

2. Agencement selon la revendication 1,
**caractérisée en ce que**
la sonde (10) est disposée parallèlement à au moins une tige de liaison (2).

3. Agencement selon la revendication 1,
**caractérisée en ce que**
la sonde (10) est disposée avec un angle de 5° à 85° degrés par rapport à la verticale.

4. Agencement selon la revendication 1,
**caractérisée en ce que**
la sonde (10) est disposée avec un angle de 5° à 85° degrés par rapport à l'horizontale.

5. Agencement selon la revendication 1,
**caractérisée en ce que**
la sonde (10) est disposée le long du flux des efforts s'exerçant dans l'élément de liaison de telle sorte qu'elle soit soumise à une déformation prévue.
